# EUROPÄISCHE PATENTSCHRIFT

(11) **EP 3 971 030 B1**
(45) Veröffentlichungstag und Bekanntmachung des Hinweises auf die Patenterteilung: **06.09.2023**
(21) Anmeldenummer: 21185054.0
(22) Anmeldetag: 12.07.2021
(51) Int. Cl.: B60P 7/08, B60D 1/14, B60D 1/46, B60P 3/22

(54) **ANHÄNGER ZUR BEFÖRDERUNG VON FLÜSSIGKEITEN**
TRAILER FOR TRANSPORTING LIQUIDS
REMORQUE DESTINÉE AU TRANSPORT DE LIQUIDES

(30) Priorität: 21.09.2020 DE 202020105390 U
(43) Veröffentlichungstag der Anmeldung: 23.03.2022
(60) Teilanmeldung: 22185747.7
(73) Patentinhaber: Röhren- und Pumpenwerk Bauer Ges.m.b.H., 8570 Voitsberg (AT)
(72) Erfinder: ROISS, Otto, 8010 Graz (AT)
(74) Vertreter: Hoefer & Partner Patentanwälte mbB

(56) Entgegenhaltungen:
- FR-A- 1 075 801
- FR-A- 1 547 408
- US-B1- 6 923 475
- US-B1- 8 419 039
- Garant Kotte: "garant VT 19.100 mit Moorflitzer-Bereifung", , 19. Juni 2020 (2020-06-19), XP055916665, Gefunden im Internet: URL:https://www.youtube.com/watch?v=KU1NFU SQGAM [gefunden am 2022-04-29]
- Garant Kotte: "garant VT 20.000 mit garant SlurryDisc HD", , 25. November 2014 (2014-11-25), XP055916680, Gefunden im Internet: URL:https://www.youtube.com/watch?v=U0smiM 3duJU [gefunden am 2022-04-29]

## Beschreibung

### Beschreibung

Vorliegende Erfindung betrifft einen Anhänger zur Beförderung von Flüssigkeiten. Der Anhänger wird insbesondere zum Befördern und Ausbringen von Wirtschaftsdünger und Klärschlamm verwendet.

Aus dem Stand der Technik sind unterschiedliche Anhänger zur Beförderung von Flüssigkeiten bekannt. Hier werden insbesondere Anhänger zur Beförderung von Wirtschaftsdünger, beispielsweise Gülle, oder Klärschlamm betrachtet. Insbesondere wird der Anhänger zum Ausbringen der Flüssigkeit auf ein Feld verwendet.

US 8 419 039 B1 zeigt eine Anhängevorrichtung zur lösbaren Befestigung einer Anhängerkupplung. Dabei ist die Anhängerkupplung in einer vertikalen Ebene relativ zu einem Befestigungsrahmen verschiebbar und drehbar. Weiteren Stand der Technik zeigen US 6 923 475 B1 und FR 1 547 408 A.

Es ist Aufgabe der Erfindung, einen Anhänger zur Beförderung von Flüssigkeiten anzugeben, der eine sichere Beförderung, insbesondere auch Ausbringung, der Flüssigkeit ermöglicht.

Die Lösung dieser Aufgabe erfolgt durch die Merkmale der unabhängigen Ansprüche. Die abhängigen Ansprüche haben vorteilhafte Ausgestaltungen der Erfindung zum Gegenstand. Die Erfindung zeigt einen Anhänger zur Beförderung von Flüssigkeiten, insbesondere Gülle. Der Anhänger umfasst einen Tank. Der Tank weist eine vordere Stirnwand und eine hintere Stirnwand auf. Die beiden Stirnwände sind über eine Mantelfläche miteinander verbunden. Eine Längsachse des Anhängers, die insbesondere parallel zur Fahrtrichtung steht, erstreckt sich durch die beiden Stirnwände. Insbesondere ist vorgesehen, dass der Tank aus Stahl gefertigt ist. Alternativ kann der Tank auch aus Kunststoff, insbesondere faserverstärktem Kunststoff, gefertigt sein.

Vorzugsweise weist der Anhänger ein Fahrgestell auf. Des Weiteren ist eine Zuggabel vorgesehen. Über diese Anhängevorrichtung kann der Anhänger an einer Zugmaschine, insbesondere einem Traktor, befestigt werden. Des Weiteren ist bevorzugt vorgesehen, dass der Anhänger eine Vorrichtung zum Ausbringen der Flüssigkeit auf ein Feld aufweist; insbesondere mit einer Pumpe und einem Auslass im Bereich der hinteren Stirnseite.

Der Anhänger umfasst eine Zuggabelaufnahme, die am Tank angeordnet ist, und eine an der Zuggabelaufnahme in unterschiedlichen Höhen befestigbare Zuggabel. Die Zuggabel ist zur Verbindung mit einer Zugmaschine, insbesondere einem Traktor, ausgebildet. Die Zuggabelaufnahme kann direkt am Tank, also beispielsweise an der Stirnwand und/oder Mantelfläche, befestigt sein. Alternativ oder zusätzlich kann die Zuggabelaufnahme auch indirekt am Tank befestigt sein: Der Tank kann beispielsweise auf einem oder mehreren Längsträgern aufliegen, wobei die Zuggabelaufnahme an dem zumindest einen Längsträger befestigt ist.

Die Zuggabelaufnahme umfasst mehrere Lochreihenanordnungen. Jede Lochreihenanordnung weist mehrere übereinander angeordnete Löcher zum Befestigen der Zuggabel in unterschiedlichen Höhen auf. Insbesondere weist die einzelne Lochreihenanordnung zwei, drei, vier, fünf oder sechs übereinander angeordnete Löcher auf. Die Löcher dienen insbesondere zum Durchstecken von Bolzen, um so die Zuggabel an der Zuggabelaufnahme zu befestigen.

Insbesondere weist die Zuggabel zwei "Zinken" auf, die jeweils über eine Lochreihenanordnung an der Zuggabelaufnahme befestigt sind und die in Fahrtrichtung nach vorne zusammenlaufen und mit einem Zugauge oder einer Kugelkupplung ausgestattet sind. Die einzelne Lochreihenanordnung der Zuggabelaufnahme ist vorzugsweise durch zwei parallele beabstandete Stahlbleche gebildet, wobei in jedem Blech die mehreren übereinander angeordneten Löcher ausgebildet sind.

Die Zuggabel ist über schräggestellte Druckmittelzylinder, insbesondere Hydraulikzylinder, mit der Zuggabelaufnahme verbunden. Dementsprechend umfasst die Zuggabelaufnahme eine linke untere Lochreihenanordnung und eine rechte untere Lochreihenanordnung zum direkten Befestigen der Gabel an der Zuggabelaufnahme. Die Befestigung der Zuggabel über entsprechende Bolzen in den beiden unteren Lochreihenanordnungen fluchtet, so dass die Zuggabel um eine Querachse drehbar ist. Des Weiteren umfasst die Zuggabelaufnahme eine linke obere Lochreihenanordnung und eine rechte obere Lochreihenanordnung zum jeweiligen Befestigen des Druckmittelzylinders. Das obere Ende des jeweiligen Druckmittelzylinders ist in der zugehörigen oberen Lochreihenanordnung höhenverstellbar befestigt. Das untere Ende des jeweiligen Druckmittelzylinders ist an der Zuggabel befestigt. Des Weiteren ist bevorzugt vorgesehen, dass der Anhänger zumindest eine Multileistenanordnung umfasst. Die einzelne Multileistenanordnung erstreckt sich parallel zur Längsachse des Anhängers seitlich an der Mantelfläche des Tanks. Die Multileistenanordnung erstreckt sich dabei über eine hier als "Anordnungslänge" bezeichnete Länge.

Die Multileistenanordnung ist zum Befestigen, insbesondere Anschrauben, von Anbauteilen ausgebildet. Diese Anbauteile dienen beispielsweise zum Befestigen eingeklappter Arme einer Schleppvorrichtung.

Die Anordnungslänge erstreckt sich über zumindest 50%, vorzugsweise zumindest 75% der Länge des Tanks. Die Länge des Tanks ist insbesondere durch die beiden Stirnwände definiert. Der Vorteil dieser sehr langen Multileistenanordnung ist, dass diese eine sehr flexible Positionierung von Anbauteilen ermöglicht. Bei der Fertigung des Anhängers muss aufgrund der sehr langen Multileistenanordnung nicht mehr berücksichtigt werden, welche Anbauteile und an welcher Position die Anbauteile anzubringen sind. Vielmehr kann ohne der Berücksichtigung vieler Varianten, jeder Anhänger mit der standardmäßig sehr langen Multileistenanordnung produziert werden.

Insbesondere ist vorgesehen, dass auf beiden Seiten des Tanks zumindest eine Multileistenanordnung verwendet wird. Besonders bevorzugt befinden sich auf beiden Seiten des Tanks jeweils zumindest zwei parallel angeordnete und beabstandete Multileistenanordnungen.

Die einzelne Multileistenanordnung umfasst bevorzugt mehrere fluchtende Leisten, die beabstandet zueinander angeordnet sind. Dabei entspricht die Summe der Länge der Leisten der "Anordnungslänge" der gesamten Multileistenanordnung. Insbesondere kann eine Multileistenanordnung entlang der Länge des Tanks zwei bis 30 einzelne Leisten umfassen. Durch Verteilen der Leisten über die gesamte Länge des Tanks ist eine sehr flexible Anordnung der Anbauteile an unterschiedlichsten Positionen möglich.

Die einzelne Multileistenanordnung erstreckt sich vorzugsweise über maximal 10 cm horizontal von der Mantelfläche weg. Diese Breite von bis zu 10 cm reicht aus, um insbesondere mit entsprechenden Durchgangsöffnungen in der Leiste die Anbauteile zu befestigen.

Weitere Einzelheiten, Vorteile und Merkmale der vorliegenden Erfindung ergeben sich aus nachfolgender Beschreibung eines Ausführungsbeispiels anhand der Zeichnungen. Es zeigen:

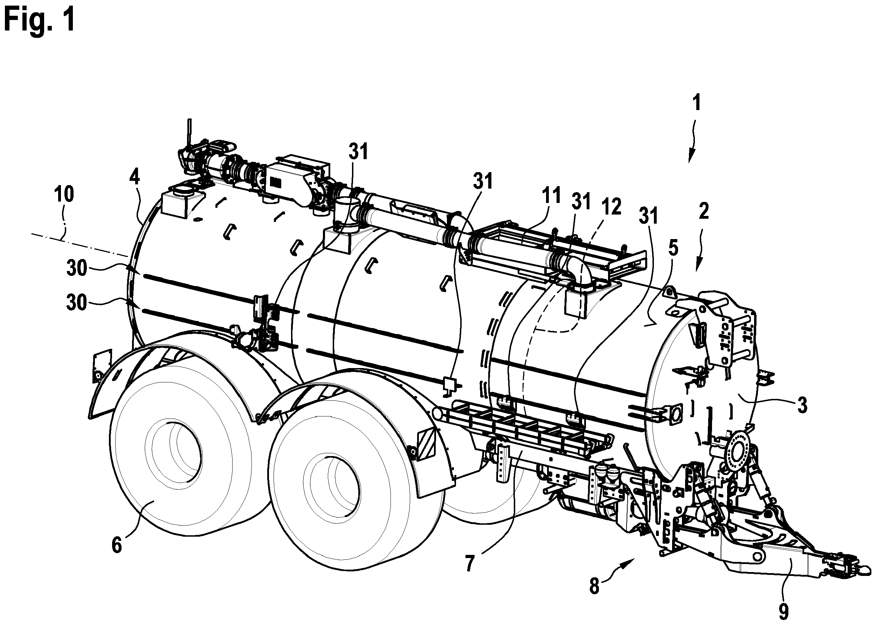

- Fig. 1: eine perspektivische Ansicht eines erfindungsgemäßen Anhängers gemäß einem Ausführungsbeispiel,
- Fig. 2: eine Detailansicht des erfindungsgemäßen Anhängers gemäß dem Ausführungsbeispiel,
- Fig. 3: eine schematische Ansicht der Trennwand in dem Tank des erfindungsgemäßen Anhängers gemäß dem Ausführungsbeispiel mit Deckeln zum Verschließen der Durchflussöffnungen,
- Fig. 4: eine Zuggabelaufnahme des erfindungsgemäßen Anhängers gemäß dem Ausführungsbeispiel,
- Fig. 5: die Zuggabelaufnahme mit Zuggabel des erfindungsgemäßen Anhängers gemäß dem Ausführungsbeispiel, und
- Fig. 6 und 7: ein Detail des erfindungsgemäßen Anhängers mit Multileisten gemäß dem Ausführungsbeispiel.

Im Folgenden wir ein Anhänger 1 zum Ausbringen von Flüssigkeit auf ein Feld im Detail beschrieben. Soweit nichts anderes erwähnt ist, wird dabei stets auf alle Figuren Bezug genommen.

Der Anhänger 1 umfasst einen Tank 2 aus Stahl mit einer vorderen Stirnwand 3 und einer hinteren Stirnwand 4, die über eine Mantelfläche 5 miteinander verbunden sind. Eine Längsachse 10 erstreckt sich parallel zur Fahrtrichtung durch die beiden Stirnwände 3, 4.

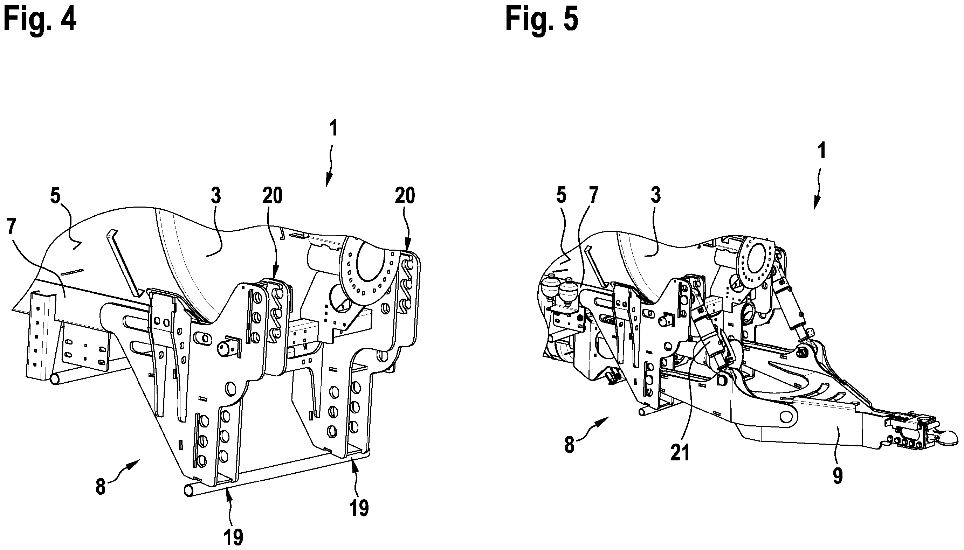

Der Tank 2 ist von einem Fahrwerk 6 getragen. Beispielsweise Fig. 4 verdeutlicht, dass unter dem Tank 2 zwei Längsträger 7 zur Aufnahme des Tanks 2 vorgesehen sind.

An der vorderen Seite des Anhängers 1 befindet sich eine Zuggabelaufnahme 8 mit einer daran höhenverstellbar angeordneten Zuggabel 9. Die Zuggabel 9 weist zwei "Zinken" auf, die nach vorne zusammenlaufen. Am vorderen Ende der Zuggabel 9 ist eine Kugelkupplung angeordnet.

An der Oberseite des Tanks 2 befindet sich ein Mannloch 11, über das in das Innere des Tanks 2 eingestiegen werden kann.

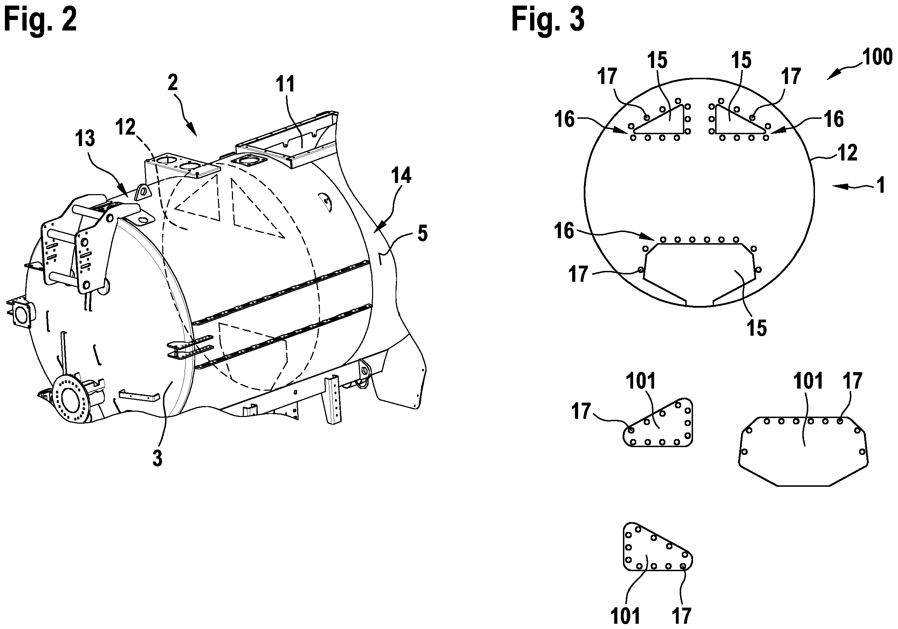

Fig. 2 verdeutlicht, dass im Inneren des Tanks 2 eine Trennwand 12 angeordnet ist. Die Trennwand 12 unterteilt den Tank 2 in ein vorderes Tankvolumen 13 und ein hinteres Tankvolumen 14. Das vordere Tankvolumen 13 ist kleiner als das hintere Tankvolumen 14.

Fig. 3 zeigt im Detail die Trennwand 12 mit drei Durchflussöffnungen 15. Gezeigt sind zwei Durchflussöffnungen 15 in der oberen Hälfte der Trennwand 12 und eine Durchflussöffnung in der unteren Hälfte der Trennwand 12.

Am Umfang der jeweiligen Durchflussöffnung 15 ist eine Befestigungsanordnung 16 ausgebildet. Die Befestigungsanordnung 16 weist mehrere Schraubenlöcher 17 auf.

Fig. 3 zeigt eine Anordnung 100, die den Tank 1 und die zugehörigen Deckel 101 zum Nachrüsten umfasst. Diese Deckel 101 passen jeweils zu einer der Durchflussöffnungen 15. Auch die Deckel 101 weisen am Umfang entsprechende Schraubenlöcher auf, so dass die Deckel 101 mit der zugehörigen Befestigungsanordnung 16 verschraubt werden können.

Die Deckel 101 sind in ihrer Größe derart ausgebildet, dass sie vollständig durch das Mannloch 11 in das Innere des Tanks 2 eingeführt werden können.

Fig. 4 und 5 zeigen, dass die Zuggabelaufnahme 8 zwei untere Lochreihenanordnungen 19 und zwei obere Lochreihenanordnungen 20 umfasst. Die Lochreihenanordnungen 19, 20 sind durch parallele beabstandete Stahlbleche gebildet. Jede Lochreihenanordnung 19, 20 umfasst mehrere, im gezeigten Beispiel drei, senkrecht übereinander angeordnete Löcher.

An den beiden unteren Lochreihenanordnungen 19 wird die Zuggabel 9 gemäß Fig. 5 mit Bolzen drehbeweglich befestigt. Die beiden oberen Lochreihenanordnungen 20 dienen zur höhenverstellbaren Halterung von Druckmittelzylindern 21. Die unteren Enden der Druckmittelzylinder 21 sind drehbeweglich mit der Zuggabel 9 verbunden; s. Fig. 5.

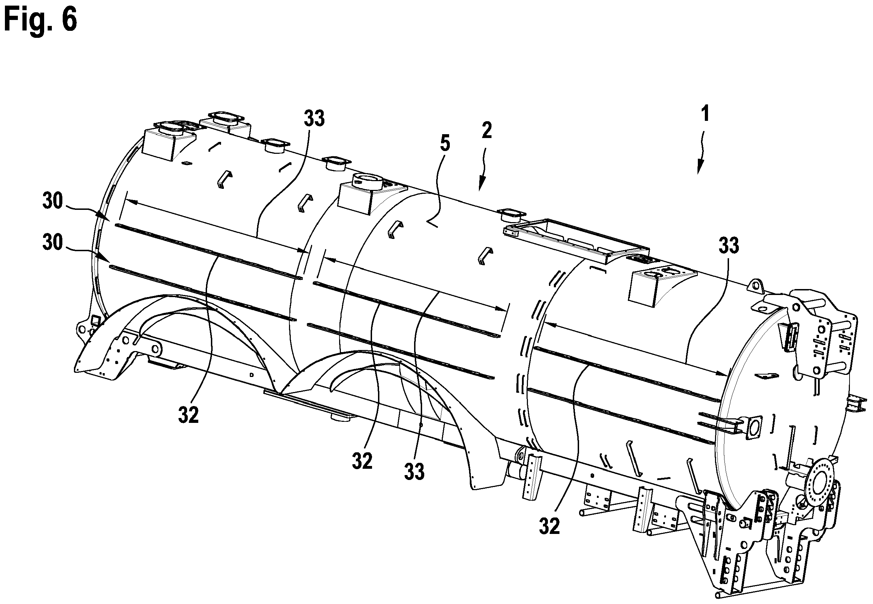

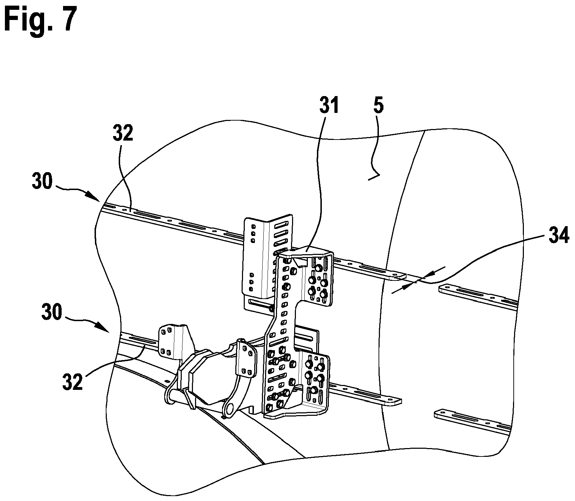

Fig. 6 und 7 zeigen eine Seite des Tanks 2 mit zwei Multileistenanordnungen 30. Auch an der gegenüberliegenden, nicht gezeigten Seite des Tanks 2 sind zwei dieser Multileistenordnungen 30 angeordnet.

Die Multileistenanordnungen 30 erstrecken sich jeweils parallel zur Längsachse 10 und befinden sich seitlich an der Mantelfläche 5 des Tanks 2. Fig. 7 verdeutlicht, dass an den Multileistenanordnungen 30 Anbauteile 31 an beliebiger Position befestigt werden können.

Die einzelne Multileistenanordnung 30 weist im gezeigten Beispiel drei fluchtende Leisten 32 auf. Jede Leiste 32 erstreckt sich über eine Leistenlänge 33. Die Summe der drei Leistenlängen 33 ergibt die im allgemeinen Teil der Beschreibung erwähnte "Anordnungslänge" der Multileistenanordnung 30.

Die einzelne Multileistenanordnung 30 bzw. die einzelne Leiste 32 erstreckt sich horizontal und senkrecht zur Längsachse 10 mit einer Leistenbreite 34. Entlang der Länge sind in den Leisten 32 diverse Durchgangsöffnungen ausgebildet, durch die Schrauben zum Befestigen der Anbauteile 31 gesetzt werden können.

### Bezugszeichenliste

- 1: Anhänger
- 2: Tank
- 3: vordere Stirnwand
- 4: hintere Stirnwand
- 5: Mantelfläche
- 6: Fahrwerk
- 7: Längsträger
- 8: Zuggabelaufnahme
- 9: Zuggabel
- 10: Längsachse
- 11: Mannloch
- 12: Trennwand
- 13: vorderes Tankvolumen
- 14: hinteres Tankvolumen
- 15: Durchflussöffnung
- 16: Befestigungsanordnung
- 17: Schraubenlöcher
- 19: untere Lochreihenanordnung
- 20: obere Lochreihenanordnung
- 21: Druckmittelzylinder
- 30: Multileistenanordnung
- 31: Anbauteil
- 32: Leiste
- 33: Leistenlänge
- 34: Leistenbreite
- 100: Anordnung
- 101: Deckel

## Patentansprüche

1. Anhänger (1) zur Beförderung von Flüssigkeiten, insbesondere Gülle, umfassend
• einen Tank (2) mit vorderer Stirnwand (3), hinterer Stirnwand (4) und einer die beiden Stirnwände verbindenden Mantelfläche (5),
• eine Zuggabelaufnahme (8) am Tank (2),
• zwei Druckmittelzylinder (21)
• und eine an der Zuggabelaufnahme (8) in unterschiedlichen Höhen befestigbare Zuggabel (9),
• wobei die Zuggabelaufnahme (8) mehrere Lochreihenanordnungen (19, 20) mit jeweils mehreren übereinander angeordneten Löchern zum Befestigen der Zuggabel (9) in unterschiedlichen Höhen umfasst,
• und wobei die Zuggabelaufnahme (8) eine linke untere Lochreihenanordnung (19) und eine rechte untere Lochreihenanordnung (19) zum Befestigen der Zuggabel (9) sowie eine linke obere Lochreihenanordnung (20) und eine rechte obere Lochreihenanordnung (20) zum jeweiligen Befestigen eines die Zuggabel haltenden Druckmittelzylinders (21) umfasst.

2. Anhänger nach Anspruch 1,
• umfassend zumindest eine Multileistenanordnung (30), die sich parallel zu Längsachse (10) des Anhängers (1) über eine Anordnungslänge erstreckt und seitlich an der Mantelfläche (5) des Tanks befestigt, insbesondere angeschweißt, ist,
• wobei die Multileistenanordnung (30) zum Befestigen, insbesondere Anschrauben, von Anbauteilen ausgebildet ist,
• und wobei die Anordnungslänge zumindest 50%, vorzugsweise zumindest 75%, der Länge des Tanks (1) beträgt.

3. Anhänger nach Anspruch 2, wobei die Multileistenanordnung (30) mehrere fluchtende, beabstandete Leisten (32) umfasst, wobei die Summe der Längen (33) der Leisten (32) der Anordnungslänge entspricht.

4. Anhänger nach Anspruch 2 oder 3, wobei zwei parallele Multileistenanordnung (30) übereinander angeordnet sind, sodass das jeweilige Anbauteil gleichzeitig an beiden Multileistenanordnung (30) befestigbar ist.

5. Anhänger nach einem der Ansprüche 2 bis 4, wobei die Multileistenanordnung (30) sich mit einer Breite (34) von maximal 10 cm horizontal von der Mantelfläche (5) erstreckt und parallel zur Längsachse (10) eine Vielzahl an hintereinander angeordneter Durchgangsöffnungen zur Aufnahme von Schrauben umfasst.

## Claims

1. A trailer (1) for transporting liquids, in particular manure, comprising
- a tank (2) with front end wall (3), rear end wall (4) and a casing surface (5) connecting the two end walls,
- a drawbar receptacle (8) at the tank (2),
- two pressure medium cylinders (21),
- and a drawbar (9), which is attachable to the drawbar receptacle (8) at different heights,
- wherein the drawbar receptacle (8) comprises multiple row of holes arrangements (19, 20), each with multiple holes disposed on top of each other, for attaching the drawbar (9) at different heights,
- and wherein the drawbar receptacle (8) comprises a left lower row of holes arrangement (19) and a right lower row of holes arrangement (19) for attaching the drawbar (9), and a left upper row of holes arrangement (20) and a right upper row of holes arrangement (20) for respectively attaching a pressure medium cylinder (21) holding the drawbar.

2. The trailer according to claim 1,
- comprising at least one multi-rail arrangement (30), which extends parallel to longitudinal axis (10) of the trailer (1) via an arrangement length and is attached, in particular welded, laterally to the casing surface (5) of the tank,
- wherein the multi-rail arrangement (30) is formed for attaching, in particular screwing on, attachment parts,
- and wherein the arrangement length is at least 50%, preferably at least 75%, of the length of the tank (1).

3. The trailer according to claim 2, wherein the multi-rail arrangement (30) comprises multiple aligned, spaced rails (32), wherein the sum of the lengths (33) of the rails (32) corresponds to the arrangement length.

4. The trailer according to claim 2 or 3, wherein two parallel multi-rail arrangements (30) are disposed on top of each other, so that the respective attachment part is attachable to both multi-rail arrangements (30) simultaneously.

5. The trailer according to one of the claims 2 to 4, wherein the multi-rail arrangement (30) extends horizontally from the casing surface (5) with a width (34) of at most 10 cm and comprises, parallel to the longitudinal axis (10), a plurality of through openings disposed one after another for receiving screws.

## Revendications

1. Remorque (1) destinée au transport de liquides, en particulier du lisier, comprenant
- un réservoir (2) avec une paroi frontale avant (3), une paroi frontale arrière (4) et une surface enveloppe (5) reliant les deux parois frontales,
- un logement de fourche de remorque (8) au niveau du réservoir (2),
- deux cylindres à fluide sous pression (21)
- et une fourche de remorque (9) pouvant être fixée au logement de fourche de remorque (8) dans différentes hauteurs,
- dans laquelle le logement de fourche de remorque (8) comporte plusieurs agencements de série de trou (19, 20) avec respectivement plusieurs trous agencés les uns au-dessus des autres pour la fixation de la fourche de remorque (9) dans différentes hauteurs,
- et dans laquelle le logement de fourche de remorque (8) comporte un agencement de série de trou (19) inférieur gauche et un agencement de série de trou (19) inférieur droit pour la fixation de la fourche de remorque (9) ainsi qu'un agencement de série de trou (20) supérieur gauche et un agencement de série de trou (20) supérieur droit pour la fixation respective d'un cylindre à fluide sous pression (21) maintenant la fourche de remorque.

2. Remorque selon la revendication 1,
- comprenant au moins un agencement à languettes multiples (30) qui s'étend parallèlement à l'axe longitudinal (10) de la remorque (1) sur une longueur d'agencement et est fixé latéralement à la surface enveloppe (5) du réservoir, en particulier est soudé,
- dans laquelle l'agencement à languettes multiples (30) est réalisé pour la fixation, en particulier le vissage, de pièces à rapporter,
- et dans lequel la longueur d'agencement s'élève au moins à 50 %, de préférence au moins 75 %, de la longueur du réservoir (1).

3. Remorque selon la revendication 2, dans laquelle l'agencement à languettes multiples (30) comporte plusieurs languettes (32) espacées s'alignant, dans laquelle la somme des longueurs (33) des languettes (32) correspond à la longueur d'agencement.

4. Remorque selon la revendication 2 ou 3, dans laquelle deux agencements à languettes multiples (30) parallèles sont agencés l'un au-dessus de l'autre de sorte que la pièce à rapporter respective puisse être simultanément fixée aux deux agencements à languettes multiples (30).

5. Remorque selon l'une quelconque des revendications 2 à 4, dans laquelle l'agencement à languettes multiples (30) s'étend avec une largeur (34) de 10 cm maximum horizontalement de la surface enveloppe (5) et parallèlement à l'axe longitudinal (10) comporte une pluralité d'ouvertures débouchâtes agencées les unes derrière les autres pour la réception de vis.
